# EUROPEAN PATENT APPLICATION

(11) **EP 4 456 304 A1**
(43) Date of publication of application: **30.10.2024**
(21) Application number: 23822765.6
(22) Date of filing: 14.04.2023
(51) Int. Cl.: H01M 50/40, H01M 50/46

(54) **SEPARATION MEMBRANE ROLL, ELECTRODE ASSEMBLY, BATTERY CELL, BATTERY AND ELECTRIC APPARATUS**

(30) Priority: 17.06.2022 CN 202221521587 U
(71) Applicant: Contemporary Amperex Technology (Hong Kong) Limited, Central, Central And Western District (HK)
(72) Inventor: XU, Chong, Ningde, Fujian 352100 (CN); LI, Cheng, Ningde, Fujian 352100 (CN); YANG, Jianrui, Ningde, Fujian 352100 (CN)
(74) Representative: Gong, Jinping
(86) International application number: PCT/CN2023/088252
(87) International publication number: WO 2023/241194

(57) **Abstract**

A separator roll (2000), an electrode assembly (23), a battery cell (20), a battery (100), and an electric device are provided. The separator roll includes a separator body (231) and a warning coating (232). The separator body (231) has a head end (a) and a tail end (b) in a length direction (F1) and is constructed to be capable of winding in the length direction (F1) to form the separator roll (2000) with the tail end (b) as a roll core. The warning coating (232) is provided on the separator body (231). The warning coating (232) is configured to be spaced from the tail end (b) by a first preset length (L1). In this way, the warning coating (232) provides a warning in advance for the position of the tail end (b) of the separator body (231) on which the warning coating (232) is located. When the warning coating (232) is detected, it indicates that at that point, there is still a first preset length (L1) away from the tail end (b) of the separator body (231), so that the position of the tail end (b) of the separator body (231) is predicted in advance and adjustment can be performed accordingly, to avoid a lack of separator body caused by insufficient length of the tail end (b), or a non-separator body (231) structure connected to the tail end (b) being directly wound into the electrode assembly (23), thereby guaranteeing the production quality and winding efficiency of the electrode assembly (23).

## Description

### CROSS-REFERENCE TO RELATED APPLICATIONS

This application refers to Chinese Patent Application No. 2022215215877, filed on June 17, 2022 and entitled "SEPARATOR ROLL, ELECTRODE ASSEMBLY, BATTERY CELL, BATTERY, AND ELECTRIC DEVICE", which is incorporated herein by reference in its entirety.

### TECHNICAL FIELD

This application relates to the field of battery technologies, and in particular, to a separator roll, an electrode assembly, a battery cell, a battery, and an electric device.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technology is an important factor in connection with their development. An electrode assembly (also referred to as a jelly roll) is an important part of a battery, and in the process of producing an electrode assembly, a separator body needs to be provided as an important insulating component.

The finished separator body is generally wound to form a separator roll, and an insulating connecting member is provided between adjacent separators so that all separator bodies are connected into a whole. In a subsequent manufacturing process, a winding process needs to be performed for the separator body in the separator roll to ultimately obtain the electrode assembly.

However, in the winding process, a phenomenon is likely to occur in which a lack of separator body happens or a connecting member between adjacent separator bodies is wound into the electrode assembly, leading to low production quality and production efficiency of the electrode assembly.

### SUMMARY

In view of the foregoing problems, this application provides a separator roll, an electrode assembly, a battery cell, a battery, and an electric device.

According to a first aspect, this application provides a separator roll including: a separator body, the separator body having a head end and a tail end in length direction and being constructed to be capable of winding in the length direction to form a separator roll with the tail end as a roll core; and a warning coating provided on the separator body, the warning coating being configured to be spaced from the tail end by a first preset length.

In this application, the warning coating provides a warning in advance for the position of the tail end of the separator body on which the warning coating is located. When the warning coating is detected, it indicates that at that point, there is still a first preset length away from the tail end of the separator body, so that the position of the tail end of the separator body is predicted in advance and adjustment can be performed accordingly, to avoid a lack of separator body caused by insufficient length of its tail end during winding of the separator body or a non-separator body structure connected to the tail end being directly wound into the electrode assembly, thereby guaranteeing the production quality and winding efficiency of the electrode assembly.

In some embodiments, the separator roll includes a plurality of separator bodies, every two adjacent separator bodies being connected head-to-tail by a connecting member, with a tail end of the separator body in the innermost layer forming the roll core. With arrangement of the connecting members, the plurality of separator bodies can be wound on a single separator roll. In this case, with arrangement of the warning coating, a specific position of the connecting member can be obtained to avoid a phenomenon that the connecting member between two adjacent separator bodies is wound into the electrode assembly in the high-speed winding process of the electrode assembly to form an unacceptable electrode assembly which will affect the production quality of the electrode assembly.

In some embodiments, a warning coating is provided on each of the separator bodies. The warning coating is used for providing a position warning for the tail end of the separator body on which the warning coating is located, so as to avoid a lack of separator body caused by insufficient length of its tail end in the high-speed winding process of the electrode assembly.

In some embodiments, the warning coating is provided on at least one surface of the separator body, and the warning coating extends along the length direction and/or width direction of the separator body such that the warning coating has sufficient dimensions in the width direction and/or the length direction of the separator body to guarantee that the warning coating can be detected by a detection apparatus.

In some embodiments, the warning coating has a second preset length in the length direction of the separator body, the second preset length being in the range of 1-1000 mm.

In some embodiments, the second preset length is in the range of 10-50 mm.

In this way, ensuring the second preset length of the warning coating allows for a sufficient detection distance when the warning coating passes by the external detection apparatus, thereby guaranteeing effective detection of the warning coating.

In some embodiments, in the width direction of the separator body, distances from two side edges of the warning coating to two side edges of the separator body are in the range of 1-1000 mm.

In some embodiments, in the width direction of the separator body, the distances from the two side edges of the warning coating to the two side edges of the separator body are in the range of 5-30 mm.

This can guarantee effective detection of the warning coating by the external detection apparatus, and can avoid mutual influence between the warning coating and a tab.

In some embodiments, the warning coating is formed by mixing one or more of rubber, polyacrylic acid, polymethacrylic acid, methyl polyacrylate, ethyl acrylate, pure acrylic emulsion, polyacrylic acid-styrene copolymer, polyvinylpyrrolidone, styrene-butadiene rubber, epoxy resin, neopentyl glycol diacrylate, sodium polyacrylate series, fluorine-containing polyolefins, and the like, to quickly form the warning coating.

In some embodiments, an RGB difference between the separator body and the warning coating is (a, b, c), where 1 ≤ a ≤ 225, 1 ≤ b ≤ 225, and 1 ≤ c ≤ 225, to guarantee that the warning coating is clearly distinguishable from the separator body in color and therefore can be identified to produce a warning effect.

In some embodiments, the connecting member includes a splicing adhesive formed by mixing one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber, to bond a head end and a tail end for two adjacent separator bodies. The splicing adhesive formed therefrom has excellent physical and mechanical properties, abrasion resistance, dimensional stability, and electrical insulation in a wide temperature range, with a long-term use temperature of up to 120°C, thereby insulatively connecting the adjacent separator bodies.

According to a second aspect, this application further provides an electrode assembly including a positive electrode plate, a negative electrode plate, and a separator disposed therebetween for separation, where the separator includes the separator body and the warning coating provided on the separator body in the separator roll according to any one of the foregoing embodiments.

According to a third aspect, this application further provides a battery cell including a housing and the electrode assembly accommodated in the housing as described in the foregoing solution.

According to a fourth aspect, this application further provides a battery including the battery cell as described in the foregoing solution.

According to a fifth aspect, this application further provides an electric device including the battery as described in the forgoing solution, where the battery is configured to supply electrical energy.

Details of one or more embodiments of this application are provided in the following accompanying drawings and description. Other features, purposes, and advantages of this application become apparent from the specification, the accompanying drawings, and the claims.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is a schematic exploded view of a battery cell according to an embodiment of this application;
FIG. 4 is a schematic three-dimensional structural diagram of a separator roll according to an embodiment of this application;
FIG. 5 is a schematic three-dimensional structural diagram of a separator roll according to an embodiment of this application;
FIG. 6 is a schematic diagram of a planar structure with a separator body and a warning coating in a separator roll according to an embodiment of this application;
FIG. 7 is a schematic diagram of a planar structure with a separator body and a warning coating in a separator roll according to an embodiment of this application;
FIG. 8 is a schematic diagram of a planar structure with a separator body and a warning coating in a separator roll according to an embodiment of this application;
FIG. 9 is a schematic diagram of a planar structure with a separator body and a warning coating in a separator roll according to an embodiment of this application; and
FIG. 10 is a schematic diagram of a planar structure with a separator body and a warning coating in a separator roll according to an embodiment of this application.

1000. vehicle; 100. battery; 200. controller; 300. motor; 10. box; 11. first portion; 12. second portion; 20. battery cell; 21. end cover; 211. electrode terminal; 22. housing; 23. electrode assembly; 2000. separator roll; 231. separator body; a. head end; b. tail end; 232. warning coating; 3000. negative electrode plate roll; 233. negative electrode plate; 4000. positive electrode plate roll; 234. positive electrode plate; 5000. winding apparatus; 6000. detection apparatus; 7000. cutting member; 30. connecting member; 40. support member; L1. first preset length; L2. second preset length; F1. length direction (winding direction); and F2. width direction.

### DESCRIPTION OF EMBODIMENTS

The following describes in detail the embodiments of technical solutions of this application with reference to the accompanying drawings. The following embodiments are merely intended for a clearer description of the technical solutions of this application and therefore are merely used as examples which do not constitute any limitation on the protection scope of this application.

Unless otherwise defined, all technical and scientific terms used herein shall have the same meanings as commonly understood by persons skilled in the art to which this application pertains. The terms used herein are intended to merely describe the specific embodiments rather than to limit this application. The terms "include", "comprise", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically defined.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two components, or an interactive relationship between two components. Persons of ordinary skill in the art can understand specific meanings of these terms in this application as appropriate to specific situations.

Currently, from the perspective of market development, application of battery packs is becoming more and more extensive. Battery packs have been widely used in not only energy storage power supply systems such as hydroelectric, thermal, wind, and solar power plants, but also other fields including electric transportation tools such as electric bicycles, electric motorcycles and electric vehicles, military equipment, and aerospace. With continuous expansion of application fields of battery packs, market demands for the battery packs are also increasing.

The applicant has noted that in the process of producing electrode assemblies for batteries, the finished separator body as an important insulating component is generally wound to form a separator roll for storage, so as to facilitate use in a subsequent process. A coiled separator roll generally has at least one separator body wound. When a plurality of separator bodies are wound in head-to-tail fashion, an insulating connecting member is provided between adjacent separator bodies so that all separator bodies are connected into a whole. In the subsequent production process of electrode assemblies, the separators are gradually peeled off from the separator roll and stacked with negative electrode plates and positive electrode plates for winding process, thereby ultimately obtaining electrode assemblies.

However, in the process of peeling off the separator body from the separator roll and winding the separator body, the position of the tail end of each separator body cannot be determined. In other words, the position of the connecting member between two adjacent separator bodies cannot be determined or the remaining winding length of the separator body cannot be determined, resulting in an unacceptable phenomenon that the insulating connecting member is wound into the internal structure of the electrode assembly in the winding process or a situation that a lack of separator body is caused by insufficient length of the tail end during winding, thus affecting the production quality and winding efficiency of the electrode assembly.

To improve the production quality of the electrode assembly, the applicant has found through research that a corresponding structure can be provided to detect the position of the tail end of the separator, so as to provide a warning in advance for the position of the tail end of the separator or the connecting member.

Based on the above considerations, to avoid the adverse effects on the production quality and winding efficiency of the electrode assembly products caused by the inability to determine the position of the winding tail end of the separator in the winding process of the separator, the applicant has designed a separator roll through in-depth research. The separator roll includes a separator body and a warning coating provided on the separator body, where the separator body has a head end and a tail end in a length direction and is wound along the length direction to form a separator roll with the tail end as a roll core, and the warning coating is configured to be spaced from the tail end of the separator body on which the warning coating is located by a first preset length. In this case, the warning coating provides a warning in advance for the position of the tail end of the separator body on which the warning coating is located. When the warning coating is detected, it indicates that at that point, there is still a first preset length away from the tail end of the separator body, so that prediction is made in advance and adjustment can be performed accordingly, to avoid a situation that the tail end has an insufficient winding length or the connecting member of the tail end is directly wound into the electrode assembly, thereby guaranteeing the production quality and winding efficiency of the electrode assembly.

The battery disclosed in the embodiments of this application may be used without limitation in electric apparatuses such as vehicles, ships, and aircrafts. The battery disclosed in this application may be used to constitute a power supply system of the electric apparatus. A mounting body involved in this application is a structure for mounting the battery in the electric apparatus.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

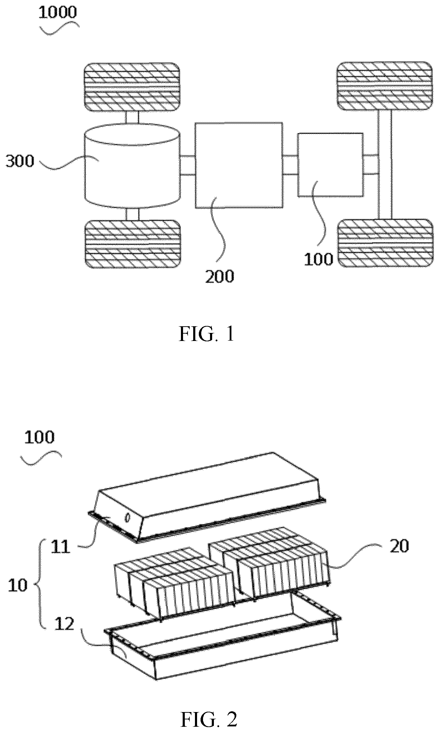

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Refer to FIG. 2. FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define an accommodating space for accommodating the battery cell 20. The second portion 12 may be a hollow structure with one end open, and the first portion 11 may be a plate structure. The first portion 11 covers an open side of the second portion 12, so that the first portion 11 and the second portion 12 jointly define an accommodating space. Alternatively, the first portion 11 and the second portion 12 may each be a hollow structure with one side open, and the open side of the first portion 11 covers the open side of the second portion 12. Certainly, the box 10 formed by the first portion 11 and the second portion 12 may be in various shapes, such as a cylinder or a cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

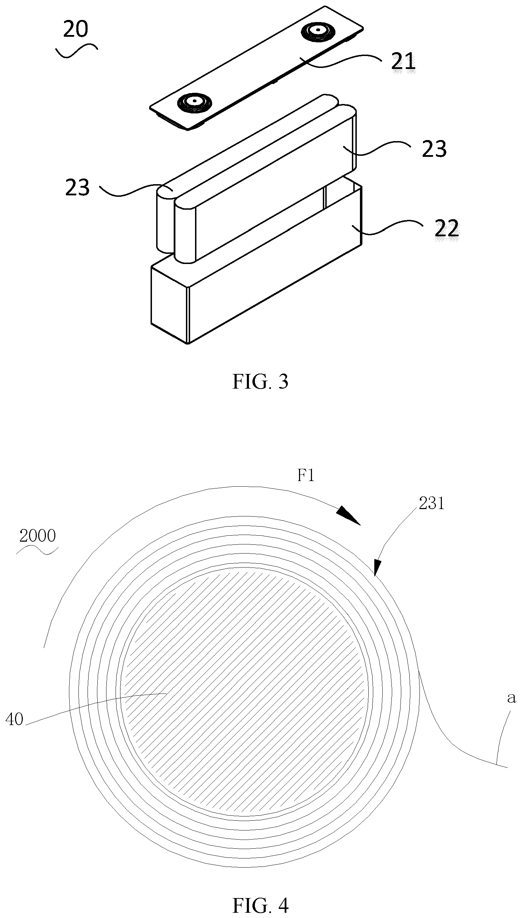

Refer to FIG. 3. FIG. 3 is a schematic structural exploded view of a battery cell 20 according to some embodiments of this application. The battery cell 20 refers to a smallest unit constituting a battery. As shown in FIG. 3, the battery cell 20 includes an end cover 21, a housing 22, an electrode assembly 23, and other functional components.

The end cover 21 refers to a component that covers an opening of the housing 22 to isolate internal environment of the battery cell 20 from external environment. Without limitation, the end cover 21 may adapt to the housing 22 in shape so as to fit the housing 22. In some embodiments, the end cover 21 may be made of a material with given hardness and strength (for example, aluminum alloy), so that the end cover 21 is less likely to deform when subjected to extrusion and collision, allowing the battery cell 20 to have higher structural strength and enhanced safety performance. The end cover 21 may be provided with functional components such as an electrode terminal 211. The electrode terminal may be configured to be electrically connected to the electrode assembly 23 for outputting or inputting electrical energy of the battery cell 20. In some embodiments, the end cover 21 may further be provided with a pressure relief mechanism 24 configured to relieve internal pressure when the internal pressure or temperature in the battery cell 20 reaches a threshold. The end cover 21 may also be made of various materials such as copper, iron, aluminum, stainless steel, aluminum alloy, and plastic. This is not particularly limited in the embodiments of this application. In some embodiments, an insulator may also be provided at an inner side of the end cover 21. The insulator may be configured to isolate an electrically connected component in the housing 22 from the end cover 21 to reduce the risk of short circuit. For example, the insulator may be made of plastic, rubber, or the like.

The housing 22 is a component fitting with the end cover 21 to form an internal environment of the battery cell 20, where the internal environment formed may be configured to accommodate the electrode assembly 23, an electrolyte, and other components. The housing 22 and the end cover 21 may be independent components, and an opening may be provided in the housing 22, so that the end cover 21 can close the opening to form the internal environment of the battery cell 20. Without limitation, the end cover 21 and the housing 22 may also be integrated. Specifically, the end cover 21 and the housing 22 may form a shared connection surface before other components are disposed inside the housing, and then the end cover 21 covers the housing 22 when inside of the housing 22 needs to be enclosed. The housing 22 may be of various shapes and sizes, for example, a rectangular shape, a cylindrical shape, and a hexagonal prism shape. Specifically, the shape of the housing 22 may be determined based on a specific shape and size of the electrode assembly 23. The housing 22 may be made of various materials such as copper, iron, aluminum, stainless steel, aluminum alloy, and plastic. This is not particularly limited in the embodiments of this application.

The electrode assembly 23 is a component in which electrochemical reactions take place in the battery cell 20. The housing 22 may include one or more electrode assemblies 23. The electrode assembly 23 is mainly formed by winding or stacking a positive electrode plate and a negative electrode plate, and a separator body is typically provided between the positive electrode plate and the negative electrode plate. Portions of the positive electrode plate and the negative electrode plate with active substances constitute a body portion of the electrode assembly, while portions of the positive electrode plate and the negative electrode plate without active substances each constitute a tab. A positive electrode tab and a negative electrode tab may both be located at one end of the body portion or be located at two ends of the body portion respectively. During charge and discharge of the battery, a positive electrode active substance and a negative electrode active substance react with an electrolyte, and the tabs are connected to electrode terminals to form a current loop.

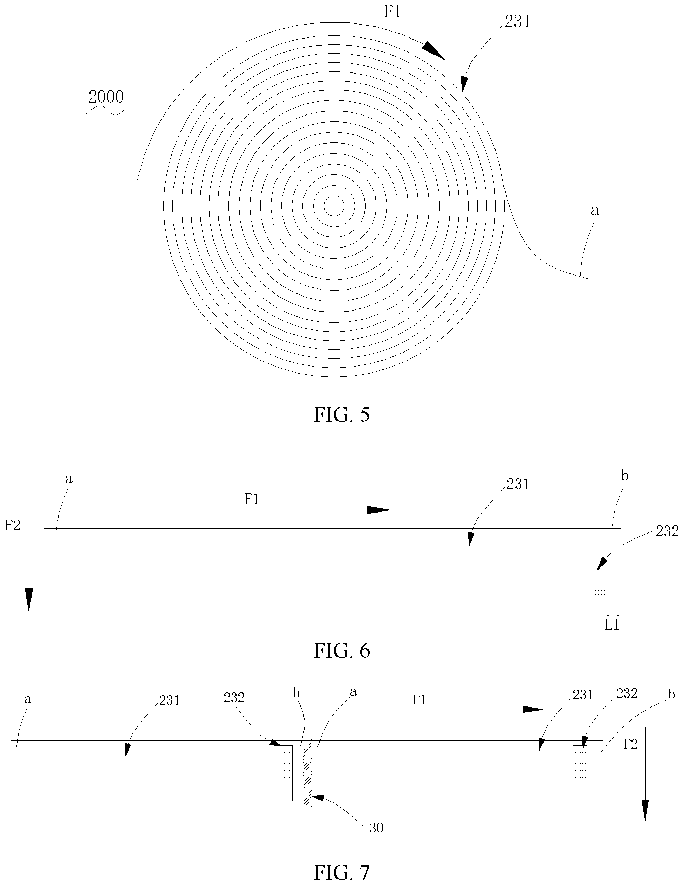

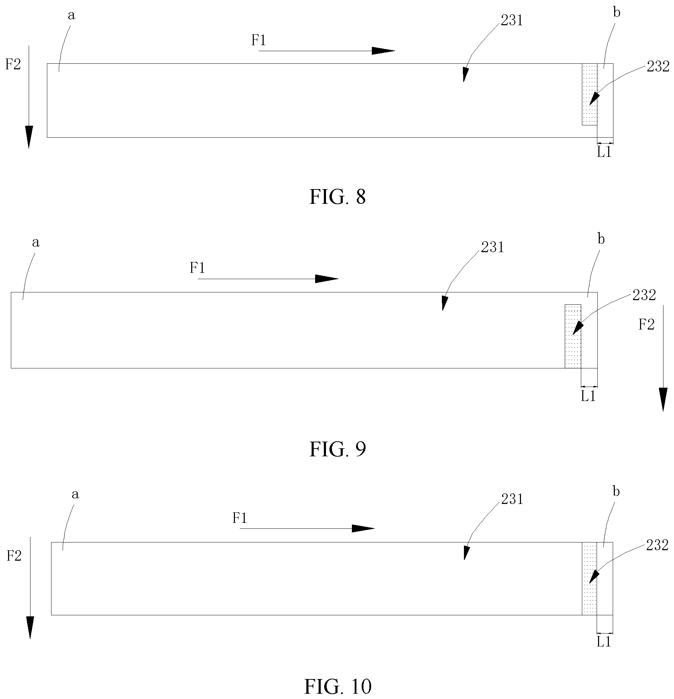

According to some embodiments of this application, referring to FIG. 4 and FIG. 5 and further referring to FIG. 6 to FIG. 8, this application provides a separator roll 2000 including a separator body 231 and a warning coating 232, where the separator body 231 has a head end a and a tail end b in a length direction F1 and is constructed to be capable of winding in the length direction F1 to form the separator roll 2000 with the tail end b as a roll core, and the warning coating 232 is provided on the separator body 231 and is configured to be spaced from the tail end b by a first preset length L1.

The separator body 231 includes a base film and/or a coating provided on at least one surface of the base film. The coating includes inorganic particles, organic particles, or organic-inorganic hybrid particles. The separator body 231 is provided between the negative electrode plate and the positive electrode plate in the electrode assembly 23 for separation. The base film may be made of PP, PE, or PI material, or other materials. The separator body 231 features electron insulation to guarantee mechanical separation of the negative electrode plate from the positive electrode plate, and the base film has a specific pore size and porosity to guarantee low resistance and high ionic conductivity.

The length direction F1 refers to direction F1 indicated by the arrow in FIG. 6 to FIG. 8. The separator body 231 has a head end a and a tail end b formed at opposite ends in the length direction F1. When the separator body 231 is wound along the length direction F1 of the separator body 231 to form the separator roll 2000 shown in FIG. 4 and FIG. 5, the winding direction F1 is transformed from the length direction F1. After the winding is completed, the head end a of the separator body 231 is located at a more outward position and the tail end b of the separator body 231 is located at a more inward position to form the roll core. When the separator body 231 is peeled off from the separator roll 2000, the head end a is pulled and peeled off from the separator roll 2000 first, and then the tail end b is peeled off from the separator roll 2000. In this way, the entire separator body 231 is peeled off completely.

A warning coating 232, a structure used for providing a warning in advance for the tail end b of the separator body 231 on which the warning coating 232 is located, is provided on the separator body 231 and can be identified by an external detection apparatus. The warning coating 232 can be formed on the surface of the separator body 231 by methods such as laying or pasting. Upon identifying the warning coating 232, the detection apparatus transmits a signal to a downstream apparatus, indicating that at that point, there is still a first preset length L1 away from the tail end b of the separator body 231 and prompting the downstream apparatus to perform operations such as cutting, thereby providing a warning in advance for the position of the tail end b of the separator body 231.

The first preset length L1 is the length L1 indicated in FIG. 6 to FIG. 8, and a distance of the first preset length L1 can be set depending on lengths of the positive electrode plate and the negative electrode plate that are wound together with the separator body 231, and this is not limited in this application. With the distance of the first preset length L1 controlled, sufficient time is left for the downstream apparatus to operate to avoid a lack of separator body in the high-speed winding process of the electrode assembly 23 caused by insufficient length of the tail end b, or a non-separator body 231 structure connected to the tail end b being directly wound into the electrode assembly 23.

In this way, the warning coating 232 provides a warning in advance for the position of the tail end b of the separator body 231 on which the warning coating 232 is located. When the warning coating 232 is detected, it indicates that at that point, there is still a first preset length L1 away from the tail end b of the separator body 231, so that the position of the tail end b of the separator body 231 is predicted in advance and adjustment can be performed accordingly, to avoid a lack of separator body caused by insufficient length of the tail end b, or a non-separator body 231 structure connected to the tail end b being directly wound into the electrode assembly 23, thereby guaranteeing the quality of the electrode assembly 23.

It can be understood that the warning coating 232 can be wound into the inside of the electrode assembly 23 without causing damage to the structure of the electrode assembly 23 or participating in electrochemical reactions of the battery 100.

The separator roll 2000 may include one or more separator bodies 231. When the separator roll 2000 includes one separator body 231, its tail end b forms a roll core, and its head end a is located at the outermost layer of the separator roll 2000. In the peeling process, the head end a is pulled and peeled off from the separator roll 2000 first. After the external detection apparatus identifies a warning coating 232, indicating that this separator roll 2000 has only a distance of the first preset length L1 left, adjustment can be made promptly to avoid a lack of separator body caused by insufficient remaining roll length.

Further, the range of values for the first preset length L1 is 0.1 millimeter (mm) to 5000 mm, preferably 1-300 mm. It should be noted that the first preset length L1 needs to be longer than the length of the separator between the negative electrode plate and the positive electrode plate in one electrode assembly 23. This ensures that after the warning coating 232 is detected, a length is still sufficient for winding for one electrode assembly 23, thereby avoiding a lack of separator body caused by insufficient remaining roll length.

In some embodiments, the separator roll 2000 includes a plurality of separator bodies 231, every two adjacent separator bodies 231 being connected head-to-tail by a connecting member 30, with a tail end b of the separator body 231 in the innermost layer forming the roll core.

The connecting member 30, a structure for connecting the tail end b and the head end a for the two adjacent separator bodies 231, is originally provided to facilitate connection of the plurality of separator bodies 231 to form a separator roll 2000 for storage or subsequent use. The connecting member 30 is not part of the electrode assembly 23 and should not be wound into the electrode assembly 23. Conventionally, the connecting member 30 is made of an insulating material and may connect the tail end b and the head end a for two adjacent separator bodies 231 by fixed connection, adhesive connection, or the like.

A tail end b of a separator body 231 at the first layer is wound for forming a roll core, and then a tail end b of a separator body 231 at the second layer is connected with the head end a of the separator body 232 at the first layer via a connecting member 30 and wound, followed by the winding of the third layer, the fourth layer, and so on.

In addition, a support member 40 may be arranged, and the plurality of separator bodies 231 are connected head-to-tail in sequence and wound to the periphery of the support member 40, thereby forming a quasi-cylindrical separator roll 2000. Alternatively, no support member 40 is provided, and the plurality of separator bodies 231 are stacked and wound to accommodate more separator bodies 231 on a same separator roll 2000.

In this way, with arrangement of the connecting members 30, the plurality of separator bodies 231 can be wound on a single separator roll 2000. In this case, with arrangement of the warning coating 232, a specific position of a connecting member 30 can be obtained to avoid a phenomenon that the connecting member 30 between a separator body 231 and another separator body 231 is wound into the electrode assembly 23 in the high-speed winding process of the electrode assembly 23 to form an unacceptable electrode assembly 23.

In some embodiments, for example, the connecting member 30 includes a splicing adhesive formed by mixing one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber. The splicing adhesive can bond a head end a and a tail end b for two adjacent separator bodies 231.

Polyethylene terephthalate is a common resin material, and the splicing adhesive formed therefrom has excellent physical and mechanical properties, abrasion resistance, dimensional stability, and electrical insulation and can connect adjacent separator bodies 231.

When it is necessary to wind a plurality of separator bodies 231 onto a separator roll 2000, the splicing adhesive is applied at connection positions of every two separator bodies 231 so that the plurality of separator bodies 231 are connected and wound to form a separator roll 2000. When the separator body 231 needs to be peeled off from the separator roll 2000, the warning coating 232 is used for providing a warning in advance for the position of the splicing adhesive, prompting a downstream apparatus to perform processing such as cutting on the tail end b of the separator body 231 to prevent the splicing adhesive from being wound with the separator body 231 into the electrode assembly 23 and thereby affecting the production quality of the electrode assembly.

In some embodiments, a warning coating 232 is provided on each of the separator bodies 231.

The warning coating 232 is used for providing a position warning for the tail end b of the separator body 231 on which the warning coating is located, to avoid a lack of separator body 231 caused by insufficient length of its tail end b in the high-speed winding process of the electrode assembly 23, and to guarantee position warning for the tail end b of each separator body 231 in the separator roll 2000, so that the warning is effectively provided for the tail end of each separator body 231 in the process of peeling off the separator body 231.

In some embodiments, the warning coating 232 is applied on at least one surface of the separator body 231 and the warning coating 232 extends along the length direction F1 and/or the width direction F2 of the separator body 231.

The width direction F2 of the separator body 231 refers to the direction F2 indicated by the arrow in FIG. 6 to FIG. 8, and the length direction F1 and the width direction F2 of the separator body 231 are perpendicular such that the warning coating 232 has sufficient dimensions in the width direction F2 and/or the length direction F1 of the separator body 231 to guarantee that the warning coating 232 can be detected by an external setting.

Two surfaces are formed on two sides of the separator body 231 facing away from each other, and the warning coating 232 can be applied on one surface or two surfaces.

Direct application of the warning coating 232 onto the surface of the separator body 231 allows for the simple and quick formation of the warning coating 232 that can be detected by an external detection apparatus without causing damage to the surface of the separator body 231. Alternatively, grooves or bumps can be formed on the surface of the separator body 231, and in some illustrative embodiments, the warning coating 232 can be formed on the groove wall or bump surface to ensure that the warning coating 232 can be directly and quickly identified by an external detection apparatus in the process of peeling off the separator body 231. This is not limited in this application.

In some embodiments, the warning coating 232 has a second preset length L2 in the length direction F1 of the separator body 231, the second preset length L2 being in the range of 1-1000 mm.

It can be understood that the separator roll 2000 is formed through winding along the length direction F1 of the separator body 231, and consequently, the separator body 231 is also peeled off from the separator roll 2000 in the length direction F1 of the separator body 231. The external detection apparatus is arranged on the peeling path of the separator body 231 to guarantee the second preset length L2 of the warning coating 232, so that a sufficient detection distance is provided when the warning coating 232 passes by the external detection apparatus. This ensures effective detection of the warning coating 232.

In some embodiments, the second preset length L2 is in the range of 10-50 mm.

In this way, the second preset length L2 is controlled in the range of 10-50 mm to guarantee the effective detection of the warning coating 232 by the external detection apparatus and to avoid the second preset length L2 being too long.

In some illustrative embodiments, the warning coating 232 may extend along the width direction F2 of the separator body 231 to two sides of the separator body 231 in the width direction F2, or the warning coating 232 may be provided in the middle of the separator body 231 without extending to the two sides.

In some embodiments, at least one side edge of the warning coating 232 coincides with an edge of the separator body 231 in the width direction F2 of the separator body 231.

In this embodiment, the following three cases are included: In the width direction F2 of the separator body 231, the left edge of the warning coating 232 coincides with an edge of the separator body 231; the right edge of the warning coating 232 coincides with an edge of the separator body 231; and two side edges of the warning coating 232 coincide with two side edges of the separator body 231.

When the two side edges of the warning coating 232 coincide with the two side edges of the separator body 231 in the width direction F2 of the separator body 231, the warning coating 232 only needs to be arranged in the width direction F2 of the separator body 231. This simplifies the production process and enables the warning coating 232 to be identified by the detection apparatus.

In some embodiments, state identification of the tabs is also included in the production process of the electrode assembly. Specifically, whether the tabs are folded can be identified through a folding sensor.

When the left edge of the warning coating 232 coincides with an edge of the separator body 231 or the right edge of the warning coating 232 coincides with an edge of the separator body 231 in the width direction F2 of the separator body 231, the side of the warning coating 232 that does not coincide with an edge of the separator body 231 can be distinguished in position from a tab on that side, to prevent misjudgment when the warning coating 232 passes by a sensor for tab identification, that is, a phenomenon that the sensor senses the warning coating 232 and misidentifies it as a tab.

It can be understood that the foregoing embodiments are illustrated in a state that the separator roll 2000 is placed vertically along the winding direction F1, but the separator roll 2000 may be placed in other ways in practical applications.

In some embodiments, the two side edges of the warning coating 232 do not coincide with the two side edges of the separator body 231 in the width direction F2 of the separator body 231.

It can be understood that the warning coating 232 running through the entire separator body 231 causes a tab folding sensor that senses the tabs on two sides of the separator body 231 in the width direction F2 during winding to falsely report tab folding when detecting the warning coating 232. Therefore, the warning coating 232 is arranged in the middle of the separator body 231 without extending to two ends of the separator body 231 in the width direction F2 to make it distinguishable in position from the tabs located at two ends of the separator body 231 in the width direction F2. This can further prevent misjudgment when the warning coating 232 passes by the sensor for tab identification, that is, a phenomenon that the sensor senses the warning coating 232 and misidentifies it as a tab. In this way, false alarms are reduced during production of the electrode assembly, improving production efficiency.

In some embodiments, in the width direction F2 of the separator body 231, distances from the two side edges of the warning coating 232 to the two side edges of the separator body 231 are in the range of 1-1000 mm.

The distances from the two side edges of the warning coating 232 to the two side edges of the separator body 231 may be equal, and in this case, the warning coating 232 is located in the middle of the separator body 231 in the width direction F2. Alternatively, the distances from the two side edges of the warning coating 232 to the two side edges of the separator body 231 may be unequal, and in this case, the warning coating 232 is predominantly positioned on a side of the separator body 231 in the width direction F2.

In some embodiments, in the width direction F2 of the separator body 231, the distances from the two side edges of the warning coating 232 to the two side edges of the separator body 231 are in the range of 5-30 mm.

The range of 5-30 mm can guarantee effective detection of the warning coating 232 by the external detection apparatus, and can avoid the mutual influence between the warning coating 232 and a tab.

The distances from the two side edges of the warning coating 232 to the two side edges of the separator body 231 should also be determined based on the dimension of the separator body 231 in its width direction F2. It can be understood that the distances from the two side edges of the warning coating 232 to the two side edges of the separator body 231 must be smaller than the dimension of the separator body 231 in its width direction F2.

The warning coating 232 is formed by a pigment, an adhesive, or a coating of mixtures and provided on the surface of the separator body 231, and has properties clearly distinguishable from those of the separator body 231, such as hue, brightness, chroma, glossiness, and color difference on the surfaces of the two, allowing the warning coating 232 to be accurately and easily detected by an external detection apparatus.

In some embodiments, the warning coating 232 includes a mixture of at least one or more of rubber, polyacrylic acid, polymethacrylic acid, methyl polyacrylate, ethyl acrylate, pure acrylic emulsion, polyacrylic acid-styrene copolymer, polyvinylpyrrolidone, styrene-butadiene rubber, epoxy resin, neopentyl glycol diacrylate, sodium polyacrylate series, and fluorine-containing polyolefins.

The fluorine-containing polyolefin binder may include but is not limited to adhesives made from polyvinylidene fluoride (PVDF), vinylidene fluoride copolymer, or their modified (for example, modified by carboxylic acid, acrylic acid, or acrylonitrile) derivatives.

The adhesive is applied onto the surface of the separator body 231 to quickly form the warning coating 232. In some illustrative embodiments, a 5# adhesive made of natural rubber, with a faster setting time and higher bonding strength, may alternatively be used.

In some embodiments, the RGB difference between the separator body 231 and the warning coating 232 is (a, b, c), where 20 ≤ a ≤ 225, 20 ≤ b ≤ 225, and 20 ≤ c ≤ 225.

It can be understood that a, b, and c within the foregoing ranges can create a noticeable color difference between the separator body 231 and the warning coating 232. In the chromatic system, color has three basic characteristics: hue, purity (also referred to as chroma or saturation), and brightness, also known in color science as the three elements of color or the three attributes of color. A color with a saturation of 0 is an achromatic color. For example, a warning coating 232 having a color difference with the separator body 231 is applied onto the separator body 231, so that the separator body 231 and the warning coating 232 have different colors, allowing the warning coating 232 to play the role of warning.

a, b, and c in the RGB color difference value between the separator body 231 and the warning coating 232 are in the range of 1-225, to guarantee that the warning coating 232 is clearly distinguishable from the separator body 231 in color and therefore can be identified to produce a warning effect.

In a specific embodiment, the surface of the separator body 231 may be controlled to be white, and RGB values of the color of the warning coating 232 are set to have a lower limit of (1, 176, 241) and an upper limit of (25, 38, 213).

In other embodiments, the surface of the separator body 231 may alternatively be set to any color and the surface of the warning coating 232 may be set to a color different from the color of the surface of the separator body 231, which is not limited in this application.

In some embodiments, in the RGB color difference value between the separator body 231 and the warning coating 232, 20 ≤ a ≤ 220, 20 ≤ b ≤ 220, and 20 ≤ c ≤ 220.

Within this range, the warning coating 232 is clearly distinguishable from the separator body 231 in color.

In some embodiments, the shape of the warning coating 232 is a rectangle, circle, semicircle, trapezoid, or triangle, and this is not limited in this application.

The rectangle, circle, semicircle, trapezoid, or triangle is capable of forming extensions in at least two directions, so as to ensure that the warning coating 232 has a second preset length L2 in the length direction F1 of the separator body 231 and extends along the width direction F2 towards two sides of the separator body 231.

In this way, the warning coating 232 can be arranged in different shapes, making the warning coating 232 easy to process and capable of achieving the role of warning.

According to some embodiments of this application, this application further provides an electrode assembly 23 including a positive electrode plate, a negative electrode plate, and a separator disposed therebetween for separation, where the separator includes the separator body 231 and the warning coating 232 provided on the separator body 231 in the separator roll 2000 according to any one of the foregoing embodiments, so that when the separator body 231 is peeled off from the separator roll 2000, the position of the tail end b of each separator body 231 can be known in advance through the warning coating 232, thereby achieving warning in advance.

In the foregoing embodiments, the manner of arranging the warning coating 231 on the separator body 231 to provide a warning in advance for the tail end b of the separator body 231 is equally applicable to the cathode electrode plate and the anode electrode plate. Details are not repeated in this application.

According to another aspect of this application, this application further provides a battery cell 20 including a housing 22 and the electrode assembly 23 accommodated in the housing 22 as described in the foregoing solution.

According to some embodiments of this application, this application further provides a battery 100 including the battery cells 20 as described in the foregoing solution.

According to some embodiments of this application, this application further provides an electric device including the battery 100 as described in the foregoing solution, where the battery 100 is configured to supply electrical energy.

In some embodiments of this application, referring to FIG. 5 to FIG. 7, this application provides a separator roll 2000. A plurality of separator bodies 231 connected head-to-tail are wound on the separator roll 2000. Adjacent separator bodies 231 are bonded to each other by a splicing adhesive. Each separator body 231 is provided with a warning coating 232 formed from a 5# adhesive, so that in the process of peeling off the separator bodies 231 from the separator roll 2000 and winding them in sequence to form the electrode assemblies 23, the warning coating 232 on each separator body 231 provides a warning in advance for the position of the splicing adhesive at the tail end b of the separator body 231 to prevent the splicing adhesive from being wound into the electrode assembly 23 due to its indiscernible position. It can be understood that with the warning in advance for the position of the tail end b of a last separator body 231, a lack of separator body due to insufficient length of the tail end b can be avoided when the last separator body 231 is peeled off and wound into the electrode assembly 23.

Technical features in the foregoing embodiments may be combined in any way. For brevity of description, not all possible combinations of the technical features in the foregoing embodiments are described. However, as long as there is no contradiction among combinations of these technical features, all the combinations should be considered within a range recorded in this specification.

The foregoing embodiments show merely several implementations of this application, and descriptions thereof are specific and detailed, but should not be construed as any limitation on the patent scope of this application. It should be noted that persons of ordinary skill in the art may further make several modifications and improvements without departing from the concept of this application, and all these modifications and improvements fall within the protection scope of this application. Therefore, the protection scope of the patent of this application should be subject to the appended claims.

## Claims

1. A separator roll, wherein the separator roll comprises:
a separator body, the separator body having a head end and a tail end in a length direction and being constructed to be capable of winding in the length direction to form a separator roll with the tail end as a roll core; and
a warning coating provided on the separator body, the warning coating being configured to be spaced from the tail end by a first preset length.

2. The separator roll according to claim 1, wherein the separator roll comprises a plurality of the separator bodies, every two adjacent separator bodies being connected head-to-tail by a connecting member, with a tail end of the separator body in the innermost layer forming the roll core.

3. The separator roll according to claim 1 or 2, wherein one warning coating is provided on each of the separator bodies.

4. The separator roll according to any one of claims 1 to 3, wherein the warning coating is provided on at least one surface of the separator body, and the warning coating extends along the length direction and/or width direction of the separator body.

5. The separator roll according to claim 4, wherein the warning coating has a second preset length in the length direction of the separator body, the second preset length being in the range of 1-1000 mm.

6. The separator roll according to claim 5, wherein the second preset length is in the range of 10-50 mm.

7. The separator roll according to claim 4, wherein in the width direction of the separator body, distances from two side edges of the warning coating to two side edges of the separator body are in the range of 1-1000 mm.

8. The separator roll according to claim 7, wherein in the width direction of the separator body, the distances from the two side edges of the warning coating to the two side edges of the separator body are in the range of 5-30 mm.

9. The separator roll according to any one of claims 1 to 8, wherein the warning coating is formed by mixing one or more of rubber, polyacrylic acid, polymethacrylic acid, methyl polyacrylate, ethyl acrylate, pure acrylic emulsion, polyacrylic acid-styrene copolymer, polyvinylpyrrolidone, epoxy resin, neopentyl glycol diacrylate, sodium polyacrylate series, fluorine-containing polyolefins, and the like.

10. The separator roll according to any one of claims 1 to 8, wherein an RGB difference between the separator body and the warning coating is (a, b, c), wherein at least one of a, b, and c is not zero.

11. The separator roll according to claim 2, wherein the connecting member comprises a splicing adhesive formed by mixing one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber, to bond a head end and a tail end for two adjacent separator bodies.

12. An electrode assembly, comprising a positive electrode plate, a negative electrode plate, and a separator disposed therebetween for separation, wherein the separator comprises the separator body and the warning coating provided on the separator body in the separator roll according to any one of claims 1 to 11.

13. A battery cell, wherein the battery cell comprises a housing and the electrode assembly accommodated in the housing according to claim 12.

14. A battery, comprising the battery cell according to claim 13.

15. An electric device, comprising the battery according to claim 14, wherein the battery is configured to supply electrical energy.
